# EUROPEAN PATENT APPLICATION

(11) **EP 3 549 891 A1**
(43) Date of publication of application: **09.10.2019**
(21) Application number: 18166196.8
(22) Date of filing: 06.04.2018
(51) Int. Cl.: B65H 45/10, B65H 45/28, B29C 53/10

(54) **APPARATUS FOR PACKING FLEXIBLE TUBING AND APPARATUS OF PACKING FLEXIBLE TUBING**

(71) Applicant: Global Mark Plastic Limited, Hong Kong (HK)
(72) Inventor: WONG, Kin Pong Eddy, Kwun Tong (HK)
(74) Representative: Baker, Philip John

(57) **Abstract**

Apparatus and method for packing flexible tubing (102) into an annular package (104), such as for continuous bin liner packaging. The apparatus has an annular packing region (112) for receiving the flexible tubing. A guide (116) axially guides the flexible tubing towards the packing region in an at least partly open configuration. Packing elements (126) repeatedly or continuously grip and fold circumferential portions of the flexible tubing towards the packing region, such that the flexible tubing is axially concertinaed into an annular package in the packing region. A corresponding method is described.

## Description

### FIELD OF INVENTION

The present invention relates to an apparatus and method for packing flexible tubing into a package. The invention has been developed primarily for packing polymer film tubing into cassettes for use as bin liner refills. However, it will be appreciated that the invention is not limited to this field of use.

### BACKGROUND

It is known to provide an annular cassette containing an extendible bin liner. The bin liner is formed from a length of flexible polymer tubing that is concertinaed into the cassette. In use, the cassette is installed at the top of a bin receptacle. A free end of the flexible tubing is drawn through the central hole in the middle of the cassette. The tubing sequentially unravels from the cassette as it is pulled towards the bottom of the receptacle. The free end of the flexible tube is closed, for example by tying a knot in it, so that the receptacle can be used for disposal of, for example, medical waste. Once the bin liner section is full, its open end is closed by way of a tie or clamp, or by knotting. The section is then removed by cutting or tearing it away from the cassette, and a new section of the tubing is pulled into place to repeat the process.

As an example, a cassette of this type may hold around 8m of flexible tube. Loading the cassette with the flexible tubing during manufacture may be a slow process, and is labour intensive if performed by hand.

### SUMMARY

According to an aspect of the invention, there is provided an apparatus for packing flexible tubing into an annular package, the apparatus comprising:
an annular packing region for receiving the flexible tubing;
a guide for axially guiding the flexible tubing towards the packing region in an at least partly open configuration;
at least one packing element for repeatedly or continuously gripping and folding circumferential portions of the flexible tubing towards the packing region, such that the flexible tubing is axially concertinaed towards the packing region.

The at least one packing element may be configured to axially concertina the flexible tubing into an annular package in the packing region.

The packing region may be substantially circular or oval in plan.

The at least one packing element may comprise at least one compression element, the at least one compression element being configured to compress the axially concertinaed flexible tubing into the packing region.

The packing region may be configured to receive a removable cassette, such that, in use, the cassette receives the annular package.

The apparatus may include means for selectively moving the removable cassette into and out of the packing region, which may comprise one or more vertical actuators.

The at least one packing element may comprise at least one driven rotatably mounted packing element. The at least one rotatably mounted packing element may comprise a plurality of circumferentially spaced apart hubs, a plurality of members extending radially from each hub, wherein tips of the members are configured to, in use, repeatedly engage the flexible tubing and pull it in an axial direction as the hubs rotate, thereby to cause the concertinaing.

The members may comprise fingers, the fingers comprising resilient tips.

The members may be disposed in rows along their respective hubs. The apparatus may comprise a plurality of the rows angularly spaced around each of the hubs.

Members towards a centre of each row may be shorter than the members at outer ends of each row, such that, in use, all of the members at least periodically engage the flexible tubing as the hubs rotate.

The guide may comprise a cylindrical guide portion, the apparatus being configured such that, in use, the flexible tubing slides along a radially outer surface of the cylindrical guide portion.

The apparatus may be configured to maintain negative air pressure within an interior of the flexible tubing adjacent the at least one packing element.

The apparatus may comprise a plurality of the packing elements circumferentially spaced apart, wherein the gripping and folding of each packing element is synchronised with that of the other packing elements.

According to another aspect of the invention, there is provided a method of packing flexible tubing into an annular package, the method comprising:
axially guiding the flexible tubing towards a packing region in an at least partly open configuration;
repeatedly or continuously gripping and folding circumferential portions of the flexible tubing towards the packing region, such that the flexible tubing is axially concertinaed towards the packing region.

The method may comprise concertinaing the flexible tubing into an annular package in the packing region.

The at least one packing element may comprise at least one rotatably mounted packing element, the method comprising rotating the at least one packing element, thereby to cause the repeated gripping and folding.

The at least one rotatably mounted packing element may comprise a plurality of circumferentially spaced apart hubs and a plurality of members extending radially from each hub. In that case, the method may comprise rotating the at least one rotatably mounted packing element such that tips of the members repeatedly engage the flexible tubing and pull it in an axial direction as the hubs rotate, thereby to cause the concertinaing.

The method may comprise synchronising the gripping and folding of each packing element with that of the other packing elements.

The at least one packing element may comprise at least one compression element, the method comprising using the at least one compression element to compress the axially concertinaed flexible tubing into the packing region.

### BRIEF DESCRIPTION OF DRAWINGS

Embodiments of the invention will now be described, by way of example only, with reference to the accompanying drawings, in which:
Fig. 1 is a perspective view of an apparatus for packing flexible tubing, according to an aspect of the invention;
Fig. 2 is a plan view of the apparatus of the Fig. 1;
Fig. 3 is a left front perspective view of the apparatus of Fig. 1 in use;
Fig. 4 is a right front perspective view of the apparatus of Fig. 1 in use;
Fig. 5 is a rear right perspective view of the apparatus of Fig. 1 in use;
Fig. 6 is a rear left perspective view of the apparatus of Fig. 1 in use;
Fig. 7 is a side elevation of the apparatus of Fig. 1 in use;
Fig. 8 is a rear elevation of the apparatus of Fig. 1 in use;
Fig. 9 is a plan view of the apparatus of Fig. 1 in use;
Figs 10A to 10C show a sequence of vertical sections through a portion of the apparatus of Fig. 1, while flexible tubing is packed into a packing region;
Figs. 11 and 12 are perspective views of an alternative embodiment of an apparatus for packing flexible tubing, according to an aspect of the invention;
Fig. 13 is a perspective view of the packing region of the apparatus of Figs 11 and 12;

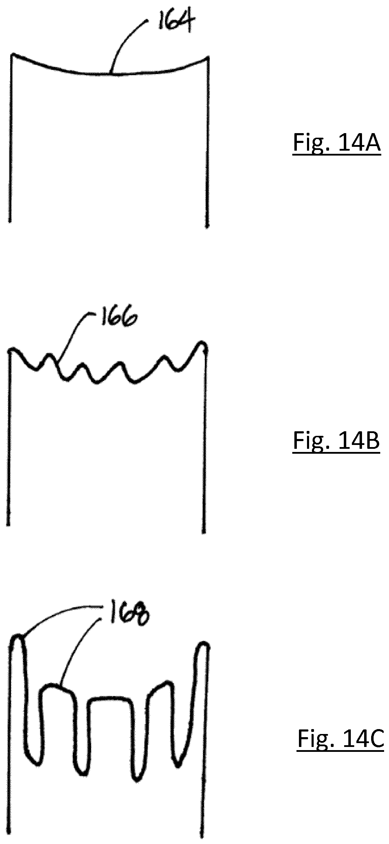

Figs 14A to 14C show examples of alternative packing members for use with aspects of the invention;
Fig. 15 is a flowchart showing steps in a method of packing flexible tubing into an annular package, according to an aspect of the invention;
Fig. 16 is a perspective view of part of an embodiment of an apparatus for packing flexible tubing, according to an aspect of the invention;
Figs. 17 to 19 show a series of vertical sections through the apparatus of Fig. 16; and
Fig 20 is a perspective view of the embodiment of Fig. 16, with the blades removed for clarity.

### DETAILED DESCRIPTION

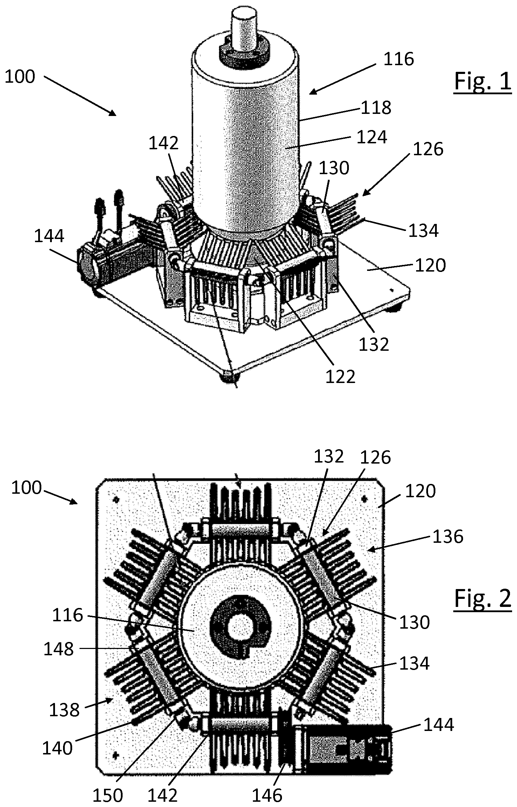

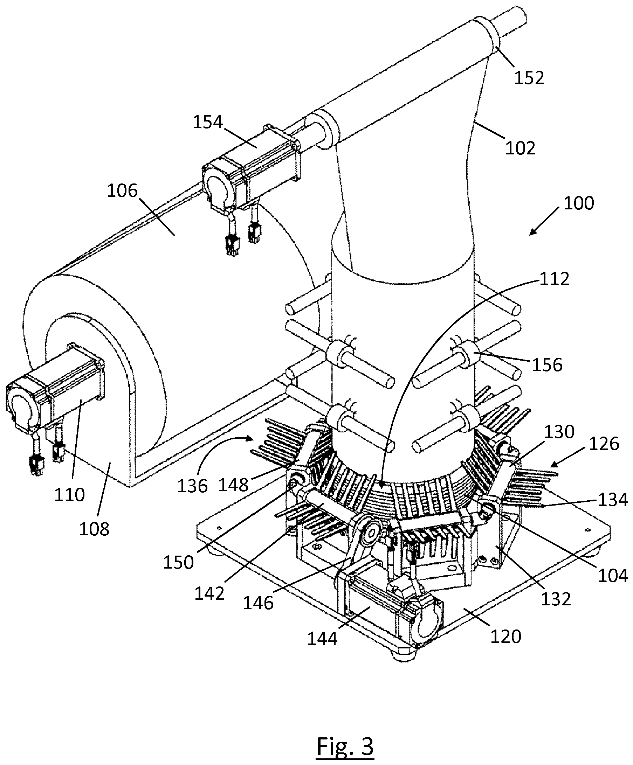

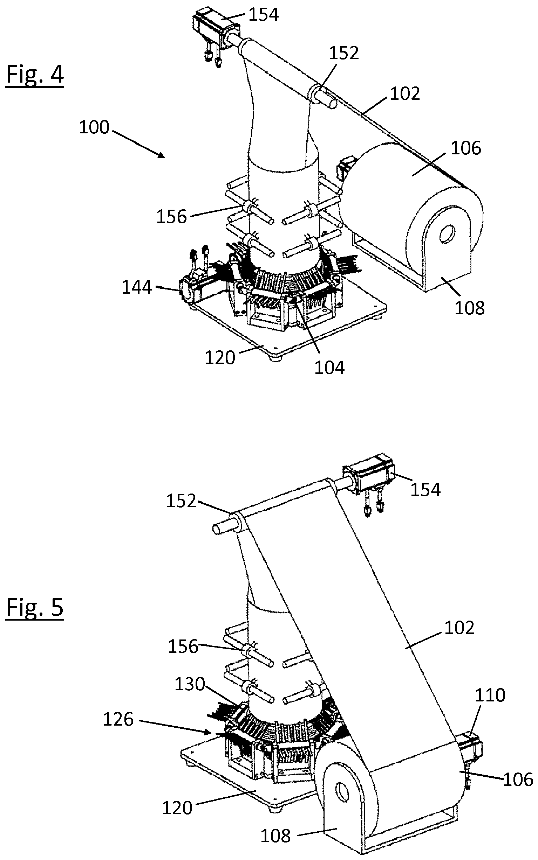

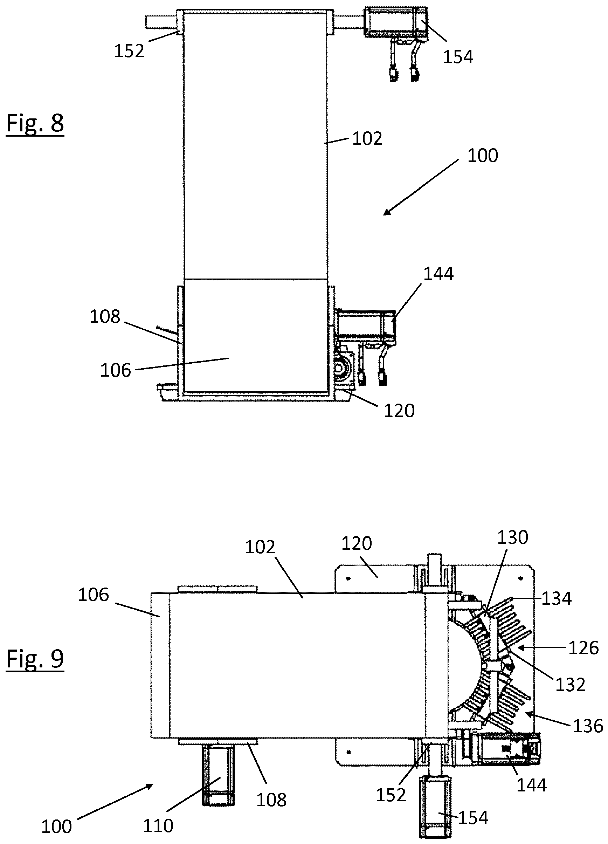

Figs 1 to 9 show an apparatus 100 for packing flexible tubing 102 into an annular package 104. The flexible tubing 102 may be formed of, for example, a thin film plastics material such as polyethylene. Other plastics or polymeric materials may be employed, depending on the desired properties of the flexible tubing. The flexible tubing 102 is, in the present embodiment, supplied on a roll 106 that is mounted on a dispenser 108. The dispenser 108 comprises an axle (not shown) for retaining the roll 106, the axle being driven by a roll motor 110 as described in more detail below.

The apparatus 100 includes an annular packing region 112 for receiving the flexible tubing 102. In the illustrated embodiment, the packing region 112 is configured to receive a removable cassette 114. The cassette 114 may be actively retained in the packing region 112, such as by way of one or more clamps, clips, retaining features, or electromechanical, hydraulic, pneumatic mechanisms, or may be a friction fit. Alternatively, the cassette 114 may be held up on a support (not shown) located beneath the packing region 112. The cassette may be actively retained on or by the support, for example by one or more clamps, etc, as described above. Alternatively, the cassette 114 may rest in position under its own weight, optionally being located by locating features (not shown).

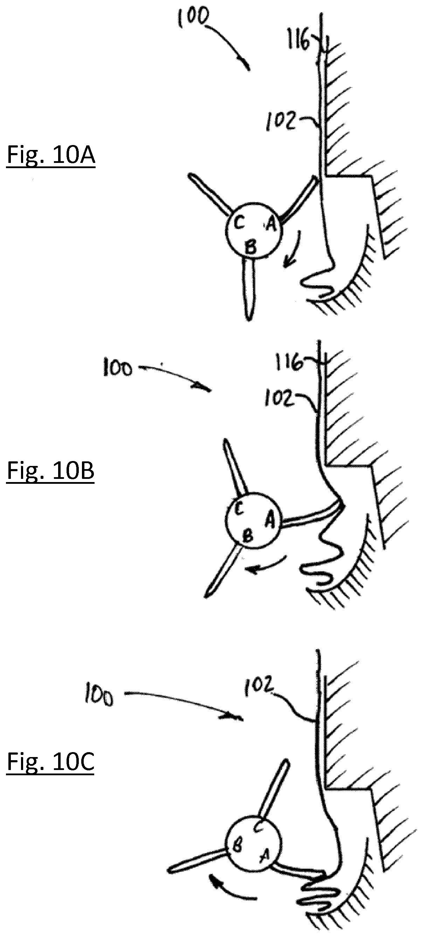

The apparatus 100 includes a guide 116 comprising a cylindrical guide portion 118 supported vertically on a base 120 via support 122. In the illustrated embodiment, the support 122 is radially recessed relative to a radially outer surface 124 of the guide portion 118, to define an annular void 125 (see Figs 10A-10C). As described in more detail below, the guide portion 118 is configured to axially guide the flexible tubing 102 towards the packing region 112 in an at least partly open configuration.

The apparatus 100 includes six rotatably mounted packing elements 126. Each packing element 126 takes the form of a hub 130 mounted for rotation on a hub bracket 132 attached to the base 120. The hubs 130 are circumferentially spaced apart from each other around the packing region 112. Each hub's axis of rotation is parallel to a tangent of the radially outer surface 124. Several fingers 134 extend radially from each hub 130. The fingers 134 are disposed in rows 136 along their respective hubs 130. There are three of the rows 136 on each hub 130, equi-angularly spaced around an axis of the hub 130.

In the illustrated embodiment, the fingers 134 towards a centre 138 of each row 136 are shorter than the fingers 134 at outer ends 140 of each row 134. The relative lengths of the fingers 134 in each row 136 are such that each row 136, in elevation, has an arcuate profile. A radius of the profile is similar to that of the outer surface 124 of the guide portion 118, which allows all of the fingers 134 to engage the tubing 102 as the corresponding hub 130 rotates. The fingers 134 at outer ends 140 of each row 134 travel further, vertically, while in contact with the tubing 102, but the resilience of the fingers 134 means that this difference can be accommodated while still providing the required concertinaing of the tubing 102 while it is packed into the packing region 112.

A first hub 142 of the hubs 130 is driven by a hub motor 144 by way of a belt drive 146. The hub motor 144 is, in this embodiment, mounted to the base 120. The first hub 142 is connected to an adjacent hub 148 by way of a universal joint 150. This form of linkage is repeated from hub to hub until all hubs 130 are driven by the hub motor 144. In the illustrated embodiment, the rotational positions of the rows 136 are synchronised such that each, in use, engages and drives the tubing 102 at the same time, as described in more detail below.

A roller guide 152 is positioned above the guide 116 for guiding the flexible tubing 102 from the roll 106 onto the guide 116. The roller guide 152 is driven by a roller guide motor 154, as described in more detail below.

Rollers 156 are positioned around the guide 116 to engage an outer surface of the flexible tubing 102. In an embodiment, the rollers 156 are passive, and act to keep the tubing 102 in place relative to the guide 116. In other embodiments, some or all of the rollers 156 may be driven, to assist in the downward movement of the tubing 102 over the guide 116, especially before the tubing 102 reaches the packing region and engages the packing elements 126.

In use, an empty cassette 114 is positioned in the packing region 112. The roll 106 of the flexible tubing 102 is mounted to the dispenser 108. An end of the tubing 102 is drawn from the roll 106 and over the roller guide 152. The end of the tubing 102 is opened, then pulled down over the guide 116 and past the packing element 126 (manually manipulating it past the fingers 134, if required) until it reaches the packing region 112.

The apparatus is then turned on, which causes the roll motor 110, hub motor 144 and roller guide motor 154 to start turning. In the illustrated embodiment, rotation of these motors is synchronised to ensure even feeding and packing of the tubing 102.

As best shown in the sequence of Figs 10A to 10C as the hubs 130 rotate, the fingers 134 are repeatedly rotated into resilient contact with an outer surface of the tubing 102 adjacent the packing region 112. As shown in Fig. 10A, a row (indicted with an 'A') of the fingers 134 initially contacts the outer surface of the tubing 102 just as it moves off the lower end of the guide 116. Since the guide 116 is close to this initial contact point, the tubing 102 resists moving radially inwardly as a result of the contact with the fingers 134. This ensures that the fingers 134 can maintain sufficient pressure to grip the outer surface of the tubing 102.

As shown in Fig. 10B, as the hub 130 rotates further, tips of the fingers 134 move downwardly towards the packing region 112. Friction between the tips of the fingers 134 and the tubing 102 causes the tubing to be gripping and pulled towards the packing region 112. It will be noted that the tips of the fingers 134 are at this point also moving radially inwardly (relative to the packing region 112) into the void 125 formed by the radially recessed support 122. This has the effect of initiating a fold 158 around a circumferential portion of the tubing 102.

As shown in Fig. 10C, as the hub 130 rotates yet further, the tips of the fingers 134 continue to pull the tubing 102 downwards. At this point, however, rotation of the hub 130 causes the tips of the fingers 134 to move radially outwardly (relative to the packing region 112) as well as down.

This further develops the fold 158, pushing it downwards and compressing it into the packing region 112.

Further rotation of the hub 130 causes the fingers 134 to disengage from the tubing 102 (as indicated by the position of fingers 160 in Fig. 10A, which are 120° ahead of the row of fingers 134 that formed the fold 158 in Figs 10-10C). The 120° spacing of the rows 136 in this embodiment means that as one row 136 of fingers 134 disengages from the tubing 102, the next row 136 of fingers 134 is already in contact with the tubing 102. This may reduce any tendency of the tubing 102 to rebound upwardly from the packing region 112. Continued rotation of the hubs 130 causes repeated folding of circumferential portions of the tubing 102, which concertinas the tubing 102 into the annular package 104 within the cassette 114.

Once a sufficient length of the tubing 102 has been concertinaed onto the cassette 114, the apparatus 100 can be turned off, which stops feeding of the tubing 102 and rotation of the hubs 130. The apparatus 100 may be turned off manually by an operator, or controlled to stop automatically once a predetermined length of the tubing has been packed. The tubing 102 may then be cut, for example adjacent the packing region 112, and the cassette 114 removed for further processing or packaging. A new cassette 114 is positioned within the packing region 112 and the process above repeated. Alternatively, the roll 106 may supply only sufficient tubing 102 for a single cassette, in which case the roll 106 will need to be replaced for each cassette. In yet other embodiments, the tubing is supplied in a form other than a roll 106, such as in pre-cut lengths that are laid out beside the apparatus 100 before feeding an end of the tubing 102 onto the apparatus 100 as described above.

It will be appreciated that although the attached figures show relatively even concertinaing of the tubing 102 as it is packed into the packing region 112, in practice the concertinaing may be less even or regular. For example, the concertinaing may involve combinations of smaller and larger folds over the course of packing a length of the tubing. Although it may be desirable in some embodiments to have the folds form in a relatively consistent manner, in other embodiments it may be acceptable for the packing to involve a more uneven "scrunched" form of concertinaing.

In at least one embodiment, the apparatus is configured to provide for negative air pressure within the tubing 102. The action of this air pressure on the inside of the tubing 102 may encourage, for example, the tubing 102 to concertina in response to the action of the fingers 134.

In at least one embodiment, the apparatus is configured to provide for positive air pressure within the tubing 102. The action of this air pressure on the inside of the tubing 102 may, for example, give the fingers 134 more to push against, which helps them resist slipping. Alternatively, or in addition, such air pressure may help reduce friction between the tubing 102 and the outer surface 24 of the guide portion 118. Alternatively, or in addition, such air pressure may assist in opening up the tubing 102 from its flattened state as it leaves the roller guide 152.

Positive or negative air pressure may be provided actively, such as by way of a pump (not shown) and associated ducting (not shown). In one embodiment, air pressure is provided from underneath the guide 116. Alternatively, it may be provided through one or more outlets on an outer surface of the guide 116 itself. Alternatively, air may be trapped within the open portion of the tubing 102 as it is initially slid onto the guide 116.

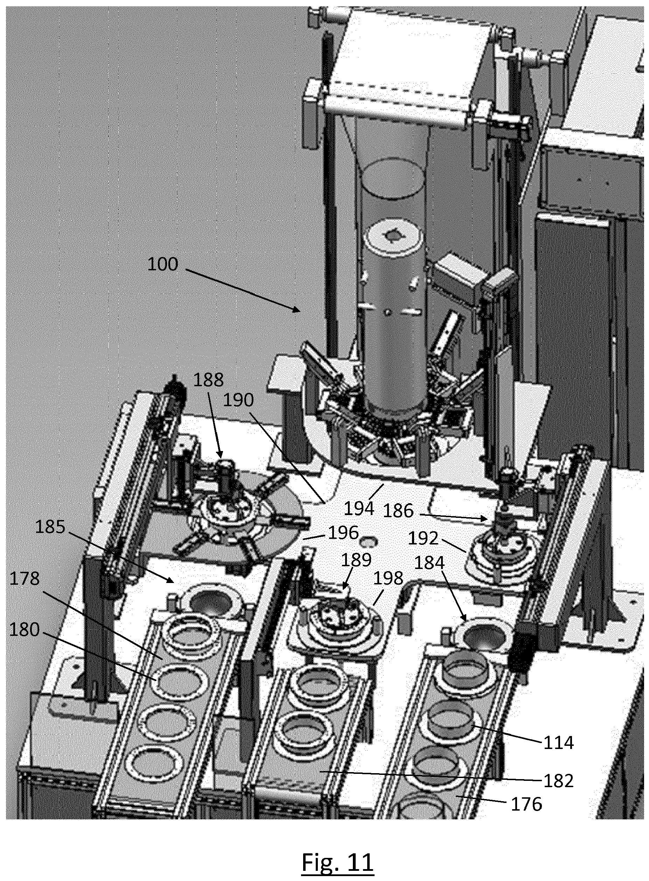

Turning to Fig. 11, there is shown an alternative embodiment of an apparatus for packing flexible tubing, which includes additional componentry for automatically feeding cassettes 114 into the apparatus 100. In this embodiment, a first conveyor 176 provides a series of cassettes 114 to be filled with the tubing 102. A second conveyor 178 provides a series of cassette lids 180. A third conveyor 182 takes cassettes away from the apparatus 100 once they have been filled with the tubing 102. There is also provided a first optical checker 184, a second optical checker 185, a first robotic arm 186, a second robotic arm 188 and a third robotic arm 189. A rotatable platform 190 is mounted for horizontal rotation. The rotatable platform 190 includes four spokes, defining corresponding first platform 192, second platform 194, third platform 196, and fourth platform 198. Each of the first, second, third and fourth platforms includes a retainer (not shown) for retaining a cassette 114 and selectively moving it between upper and lower positions, as described in more detail below.

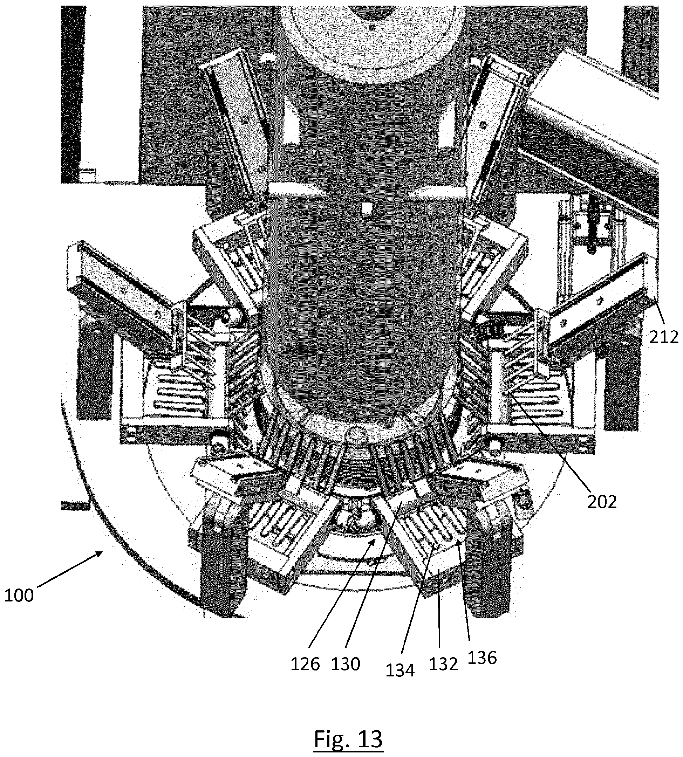

In the embodiment of Figs 11 to 13, cassettes 114 are moved along the first conveyor 176. As each cassette 114 reaches the end of the first conveyor 176, the first robotic arm 186 grabs it. The first robotic arm 186 moves the cassette 114 over the optical checker 184, which checks the orientation of the cassette 114. The first robotic arm 186 rotates the cassette 114 into a correct alignment if necessary.

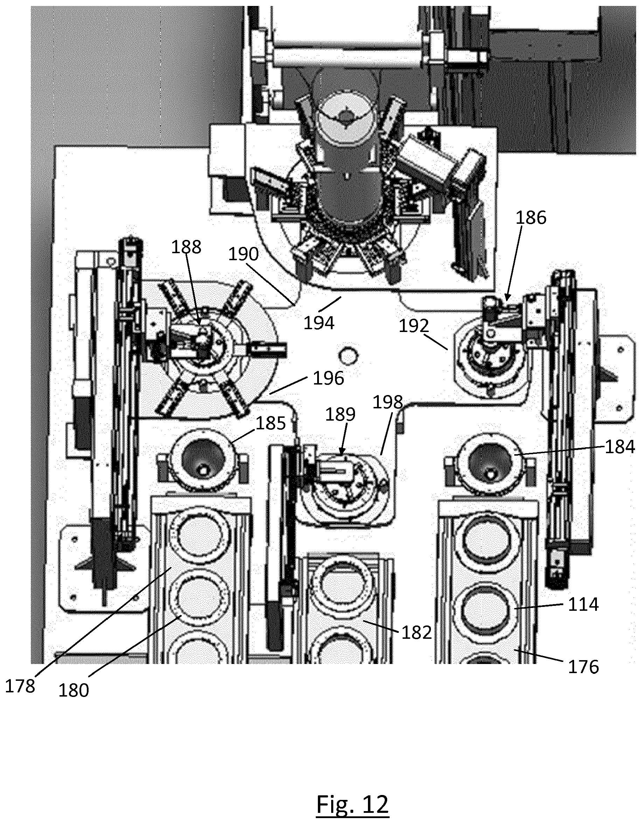

The first robotic arm 186 places the correctly aligned cassette 114 onto the retainer on the first platform 192. The rotatable platform 190 is rotated by 90° in a counterclockwise direction, until the cassette 114 is positioned beneath the guide portion 118. Second platform 194 is in this position in Figs. 11 and 12, and the description of the next stage will be made in relation to the cassette 114 on the second platform 194.

The retainer of the second platform 194 moves the cassette 114 up towards the guide portion 118. The cassette 114 is retained by a snap-lock retainer (not shown) adjacent the bottom end of the guide portion 118. This retains the cassette 114 in this position until the process of filling it with the tubing 102 is complete.

The tubing 102 is fed down the guide portion 118 and concertinaed onto the cassette 114 as described above in relation to the embodiment of Figs 1 to 9.

Optionally, vertical compression elements in the form of tamping fingers 202 may be circumferentially spaced around the packing region 112. Once the tubing 102 has been concertinaed onto the cassette 114 (or periodically during the packing process), the tamping fingers 202 are axially driven by a linear actuator 212 into contact with the packed tubing 102. This compresses the packed tubing 102 more tightly onto the packing region 112, because the tamping fingers 202 are configured to provide considerably more downward pressure to the tubing 102 than can be provided by the fingers 134.

Once the tubing 102 has been packed onto the cassette 114, the retainer of second platform 194 moves upwards, grasps the cassette 114, and disengages it from the snap-lock retainer. The rotatable platform 190 is rotated by 90° in a counterclockwise direction. The third platform 196 is in this position in Figs. 11 and, and the description of the next stage will be made in relation to the cassette 114 on the third platform 196.

At this point, the second robotic arm 188 picks up a cassette lid 180 supplied by the second conveyor 178, passes it over the second optical checker 185 to check its rotation, rotates it (if necessary) to align it with the cassette 114, and then snaps it into place on the cassette 114. The lid 180 may, of course, attach other than via a snap-lock arrangement. The lid 180 may be joined to the cassette by way of any suitable one or more of adhesives, heat-welding, ultrasonic welding, interference fit, screwing, or any other mechanism for joining the two components.

The rotatable platform 190 is rotated by 90° in a counterclockwise direction. The fourth platform 198 is in this position in Fig. 11, and the description of the next stage will be made in relation to the cassette 114 on the fourth platform 198.

The third robotic arm 189 picks up the completed cassette 114 from the vertical actuator 200 of the fourth platform 198, and places it on the third conveyor 182. The third conveyor 182 moves the completed cassette 114 to, for example, a further packaging station where it can be shrink-wrapped or otherwise further packaged for distribution.

It will be appreciated that either or both of the first optical checker 184 and second optical checker 185 may be omitted if the relative orientation of either or both of the cassette 114 and cassette lid 180 is not critical.

While a snap-lock retaining mechanism has been described for retaining the cassette 114 in position relative to the guide portion 118, other forms of retention may be used. For example, the retainer may stay in the upward position, thereby holding the cassette 114 in position while the tubing 102 is fed onto it. Hydraulic, pneumatic, and/or electromagnetic retaining mechanisms may be used for actively retaining the cassette 114 in position relative to the guide portion 118.

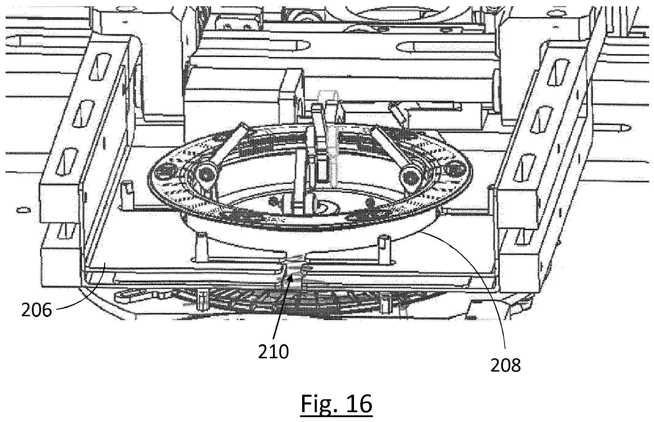

The tamping fingers 202 are optional in this embodiment. Also, other forms of tamping mechanism may be provided. For example, one or more arcuate members conforming approximately to the shape of the packing region 112 may be used to tamp down the concertinaed tubing 102 on the cassette 114, as described below in relation to the embodiment of Fig. 16.

It will be appreciated that some incidental details have been omitted and/or are not described, for clarity. For example, there may be mechanisms for ensuring the process taking place at the first, second, third and fourth platforms are all finished before the platform 190 rotates to the next position. Similarly, any or all of the conveyors may include sensors and controllers for indexing the cassettes 114 and lids 180 so that the conveyors do not run continuously. Other forms of production control may be employed. This type of control is well known to those skilled in the art, and so is not described in detail here

In the illustrated embodiments, the packing members may be formed from a resilient material such as silicone or any other flexible polymer. The material may be selected to provide the desired friction between the packing members and the tubing 102. The resilience of the material, along with profiles of the packing members, may be selected to allow any required amount of deformation of the packing members as they engage the tubing 102. This deformation may allow, for example, the required folding sequence, as well as ensuring that pressure is kept sufficiently low that the packing members do not pierce the tubing 102.

In the illustrated embodiment, the packing members comprise rows 136 of fingers 134. It will be appreciated that the packing members may take other forms. For example, each row of fingers may be replaced by:
- a curved blade 164 as shown in Fig. 11A;
- a profiled blade, such as scalloped blade 166 shown in Fig. 11B; or
- a row of fingers 168 of uneven width, as shown in Fig. 11C.

Substantially all of the packing elements may be formed from a resilient material such as silicone or another flexible polymer. Alternatively, only a distal portion of the packing element may comprise (or be at least partly covered by) the resilient material, for enabling frictional gripping of the tubing 102.

In other embodiments, the packing element may comprise one or more flexible packing members (not shown). For example, the or each packing member may comprise a flexible elongate element mounted for rotation along its axis. The member can comprise, for example, a flexible polymeric material, a spring, flexible sections joined together, or any other arrangement allowing the packing element to bend into a generally arcuate shape that may be rotated along its length while the arc does not rotate (supports or guides (not shown) may be used to prevent the arcuate shape from rotating). The or each packing member may include one or more of the blades or fingers described herein, or any other suitable element for engaging the tubing 102 and concertinaing it into the annular package. In an embodiment, a single packing member (not shown) of this type is used, which encircles all or at least a majority of the tubing 102, thereby providing even packing of the tubing 102 into the annular package.

Although the illustrated embodiment describes the use of a cassette 114, this is optional. In other embodiments, the tubing 102 is packed directly into the packing region 112. Once removed from the packing region 112, the packed tubing may optionally be packed into a cassette 114 or other form of packaging for supply to an end user.

The illustrated embodiment shows a circular (in plan) packing region. It will be appreciated, however, that use of this shape is not essential. The packing region may be of any suitable shape in plan, such as oval. A non-circular packing region will, in general, be used where it is desired to produce a correspondingly non-circular package of the tubing.

The illustrated embodiment shows six packing elements 126, each of which comprises a hub 130 with three equi-angularly spaced rows 136 of fingers 134. Any number packing elements may be employed, but five or six has been found to provide a good balance between even concertinaing and mechanical simplicity. Any suitable number of rows 136 may be employed, but three or four has been found to provide relatively good performance. Any suitable number of fingers may be employed, but about six has been found to provide relatively good performance. It is not strictly necessary for the fingers 134 to be in rows 136, or for any such rows 136 to be equi-angularly spaced around the hubs 130, but equi-angularly spaced rows 134 have been found to provide relatively good performance.

The hubs 130 are shown as being linked by a universal joint 150, but any other form of suitable linkage may be employed. By way of non-limiting example, the linkage may take the form of a flexible element such as silicone or rubber tubing, or a spring.

The illustrated apparatus 100 has a vertical guide 116 and horizontally arranged packing region 112. This combination of orientations may help with even feeding and packing of the tubing 102, but other orientations may be used in different embodiments.

In some embodiments, the tubing 102 may be fed directly onto the guide 116 without passing an intermediate roller guide 152. The roller guide does, however, help in the smooth feeding of the tubing 102 onto the guide 116.

A number of non-essential features are omitted from the drawings for the sake of clarity. For example, the apparatus 100 may be installed as part of a production line, and/or may be mounted on a stand, frame or worktop to bring it to a height that makes it easier for a human operator to use. Switches and control circuitry for powering and controlling the speed of the motors are not shown, but are well understood by the skilled person.

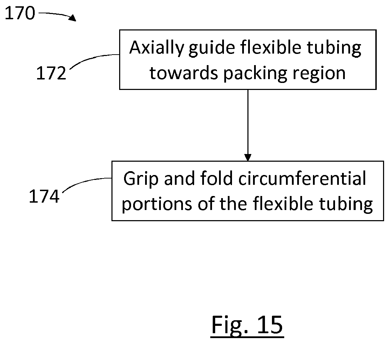

Turning to Fig. 15, there is shown a flowchart 170 showing steps in a method of packing flexible tubing into an annular package. The flexible tubing may be of the type described above, and the method may be performed using an apparatus such as that described above with reference to Figs 1 to 11C. It will be appreciated, however, that other types of apparatus may be used to implement the method.

The method comprises axially guiding 172 flexible tubing 102 towards a packing region 112 in an at least partly open configuration. Circumferential portions of the flexible tubing 102 are then repeatedly gripped and folded 174 towards the packing region, such that the flexible tubing 102 is axially concertinaed into an annular package in the packing region 112. In alternative embodiments, the flexible tubing 102 is continuously gripped and folded to a similar end.

Optionally, the at least one packing element comprises at least one rotatably mounted packing element. In that case, the method comprises rotating the at least one packing element, thereby to cause the repeated or continuous gripping and folding.

Optionally, the at least one rotatably mounted packing element comprises:
a plurality of circumferentially spaced apart hubs; and
a plurality of members extending radially from each hub;

In that case, the method comprises rotating the at least one rotatably mounted packing element such that tips of the members repeatedly engage the flexible tubing and pull it in an axial direction as the hubs rotate, thereby to cause the concertinaing.

Optionally, the gripping and folding of each packing element may be synchronised with that of the other packing elements.

In alternative embodiments, the packing elements may include one or more compression elements configured to compress the axially concertinaed flexible tubing into the packing region. For example, Fig. 16 shows an embodiment comprising a plurality of compression elements in the form of horizontally-extending blades 206. Each blade 206 is mounted such that it can be moved in radial and axial directions. In plan, each blade 206 has an arcuate portion 208, such that the arcuate portions of all the blades together define an aperture when the blades are moved to the radially inward position.

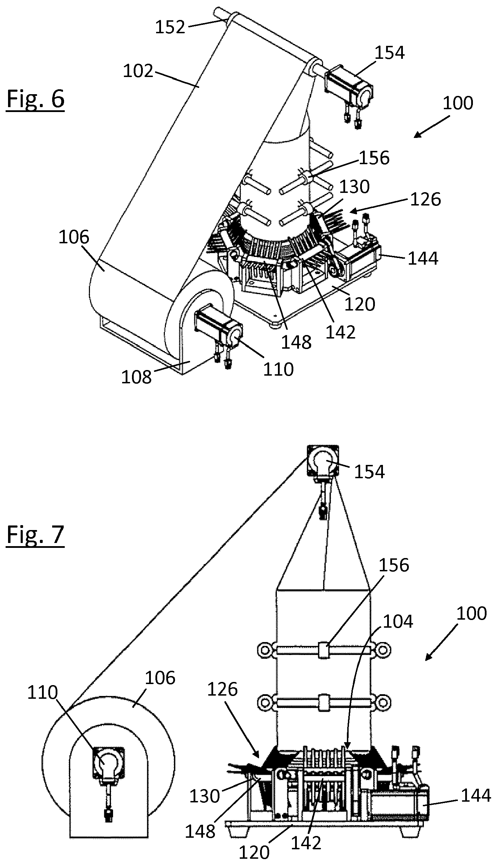

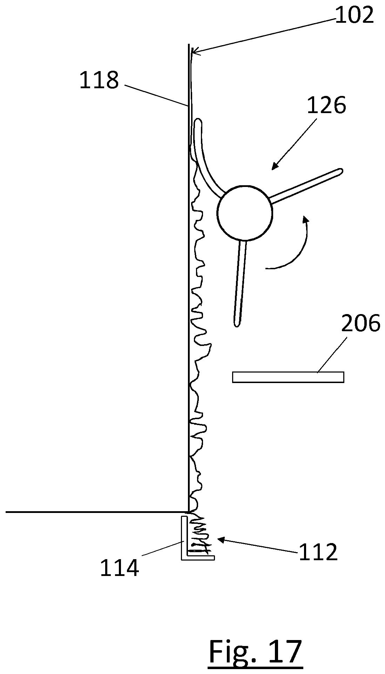

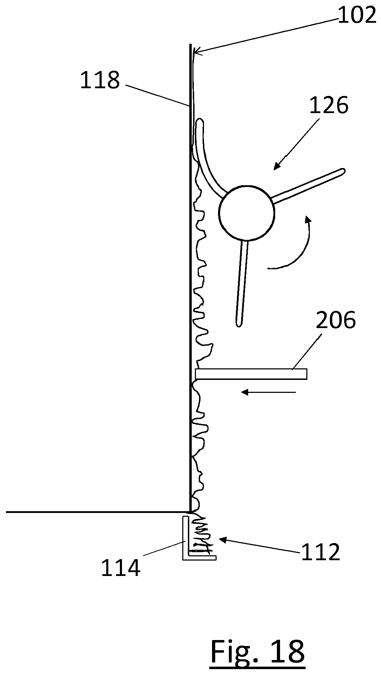

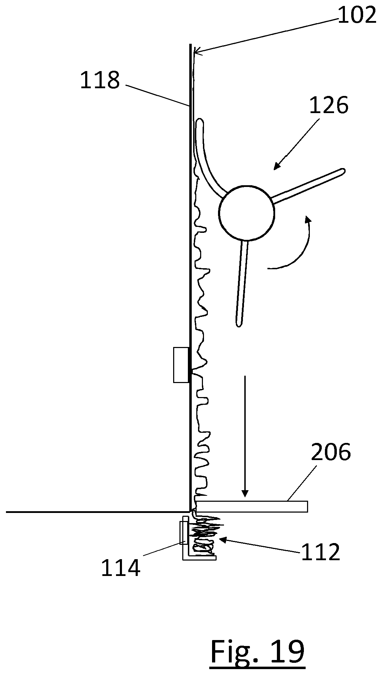

Figs 17-19 show a sequence of the embodiment of Fig. 16 in use. Initially, as shown in Fig. 7, the flexible tubing is gripped by the rotatably mounted packing elements 126, in a manner similar to that described above. At this time, the blades 206 are in the radially outward position. The rotation of the rotatably mounted packing elements 126 causes the flexible tubing 102 to concertina towards the packing region 112. Periodically, the blades 206 are moved radially inwardly into contact with the concertinaed tubing, as shown in Fig. 18, and then vertically downwards, as shown in Fig. 19, to compress the concertinaed tubing 102 into the packing region 112. The blades 206 may then be moved radially outwardly and vertically to return to the position shown in Fig. 17.

The vertical compression process may periodically be repeated in some embodiments. Alternatively, the process may only be performed once, when all of the flexible tubing for one cartridge 114 has been concertinaed towards or into the packing region 112.

The size, number, and configuration of the vertical compression elements may take any suitable form. For example, the compression elements may take the form of one or more curved bars having a similar shape, in plan, the arcuate sections described in relation to Fig. 16.

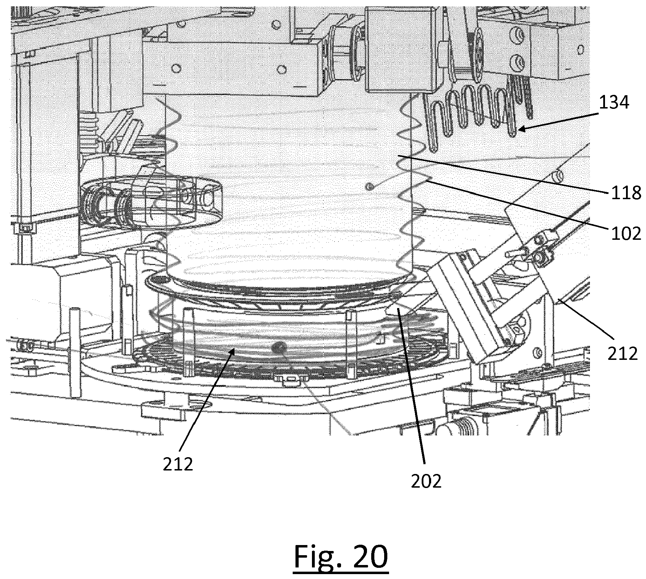

As shown in Fig. 20, in which the blades have been removed for clarity, additional vertical compression elements in the form of tamping fingers 202 may be provided. The tamping fingers are not shown in Figs 16-19, for clarity. In this case, the tamping fingers 202 may act to hold the compressed tubing 102 in place within the packing region 112 after the blades 206 have compressed the tubing 102 downwards. This prevents the tubing 102 from creeping upwardly out of the packing region 112 while the blades 206 are returning for another compression stroke. The tamping fingers 202 may be activated by a linear actuator 212 as, or shortly before, the blades 206 disengage the tubing 102 at the bottom of the stroke (i.e., around the time when the blades 206 are at position shown in Fig. 19). The tamping fingers 202 may be retracted by the linear actuator 212 around the time that the blades 206 start their downward movement to compress the tubing 102 into the packing region. Other activation timings may be employed to suit the needs of different embodiments.

In the embodiment of Figs 16-20, the tamping fingers 202 may be circumferentially positioned so as to avoid the blades 206. For example, one or more tamping fingers 202 may be positioned and orientated to extend into the gap 210 (see Fig. 16) between the blades 206 when they are in the inward position, and another set of one or more tamping fingers 202 may be provided in the corresponding diametrically opposite gap between the blades 206. Alternatively, the tamping fingers 202 maybe be angled and positioned such that they actuate into the space that opens between the concertinaed tubing 102 and the radially inner edge of the blades 206 as they retract. The tamping fingers 202 may then be withdrawn as the blades 206 are moved inwardly as shown in Fig. 18, so as not to foul on the blades 206.

In yet other embodiments (not shown), the blades 206 may include one or more cut-outs or apertures through which the tamping fingers 202 may extend. In that case, the tamping fingers may remain engaged with the compressed tubing longer due to not needing to avoid fouling on the blades.

Although tamping fingers having been described in relation to various embodiments, other tamping or retention mechanisms may be employed to periodically compress and/or hold the compressed concertinaed tubing 102 in place within the packing region. For example, instead of fingers, one or more arcuate (in plan) blades may be used. In some embodiments, the finger(s) or blade(s) may be formed from a resilient material such as rubber, silicon or other polymeric material. Alternatively, the finger(s) or blades may be formed from a relatively rigid material, such as metal or plastics materials. In yet other embodiments, a finger or other member may be rotated such that a portion of the finger or other member compresses the tubing 102 into the packing region 112 as described above.

Whichever form the finger, blade, or other member takes, it may be desirable for the tip of the finger(s) or blade(s) to include a gripping portion at the end, formed from a material that tends to grip the plastic tubing without puncturing or otherwise damaging it. The material may be a resilient material such as rubber or silicone, and may optionally include gripping features such as dots, ribs, or other formations that tend to improve grip.

Optionally, the blades 206 may be mounted to the platform upon which the cassette 114 is mounted while the tubing 102 is loaded into it. In this case, once the required length of tubing has been loaded into the cassette 114, the blades 206 maintain downward pressure on the tubing 102 to hold it within the packing region 112 while the cassette 114 is moved to the station at which the lid 180 is added. The blades 206 may be retracted immediately before placement of the lid 180, thereby minimising the opportunity for the compressed tubing 102 to spring out of the packing region.

Although the invention has been described reference to a number of specific non-exhaustive and non-limiting embodiments, the skilled person will appreciate that the invention may be embodied in many other forms.

## Claims

1. Apparatus for packing flexible tubing into an annular package, the apparatus comprising:
an annular packing region for receiving the flexible tubing;
a guide for axially guiding the flexible tubing towards the packing region in an at least partly open configuration;
at least one packing element for repeatedly or continuously gripping and folding circumferential portions of the flexible tubing towards the packing region, such that the flexible tubing is axially concertinaed towards the packing region.

2. Apparatus according to claim 1, wherein the at least one packing element is configured to axially concertina the flexible tubing into an annular package in the packing region.

3. Apparatus according to claim 1, wherein the packing region is substantially circular or oval in plan.

4. Apparatus according to any preceding claim, wherein the at least one packing element comprises at least one compression element, the at least one compression element being configured to compress the axially concertinaed flexible tubing into the packing region.

5. Apparatus according to any preceding claim, wherein the packing region is configured to receive a removable cassette, such that, in use, the cassette receives the annular package.

6. Apparatus according to claim 5, including means for selectively moving the removable cassette into and out of the packing region.

7. Apparatus according to claim 6, wherein the means for selectively moving the removable cassette comprises one or more vertical actuators.

8. Apparatus according to any preceding claim, wherein the at least one packing element comprises at least one driven rotatably mounted packing element.

9. Apparatus according to claim 8, wherein the at least one rotatably mounted packing element comprises:
a plurality of circumferentially spaced apart hubs; and
a plurality of members extending radially from each hub;
wherein tips of the members are configured to, in use, repeatedly engage the flexible tubing and pull it in an axial direction as the hubs rotate, thereby to cause the concertinaing.

10. Apparatus according to claim 9, wherein the members comprise fingers, the fingers comprising resilient tips.

11. Apparatus according to claim 9 or 10, wherein the members are disposed in rows along their respective hubs.

12. Apparatus according to claim 11, comprising a plurality of the rows angularly spaced around each of the hubs.

13. Apparatus according to claim 11 or 12, wherein the members towards a centre of each row are shorter than the members at outer ends of each row, such that, in use, all of the members at least periodically engage the flexible tubing as the hubs rotate.

14. Apparatus according to any preceding claim, wherein the guide comprises a cylindrical guide portion, the apparatus being configured such that, in use, the flexible tubing slides along a radially outer surface of the cylindrical guide portion.

15. Apparatus according to any preceding claim, configured to maintain negative air pressure within an interior of the flexible tubing adjacent the at least one packing element.

16. Apparatus according to any preceding claim, comprising a plurality of the packing elements circumferentially spaced apart from each other, wherein the gripping and folding of each packing element is synchronised with that of the other packing elements.

17. A method of packing flexible tubing into an annular package, the method comprising:
axially guiding the flexible tubing towards a packing region in an at least partly open configuration;
repeatedly or continuously gripping and folding circumferential portions of the flexible tubing towards the packing region, such that the flexible tubing is axially concertinaed towards the packing region.

18. The method of claim 17, comprising concertinaing the flexible tubing into an annular package in the packing region.

19. The method of claim 17 or 18, wherein the at least one packing element comprises at least one rotatably mounted packing element, the method comprising rotating the at least one packing element, thereby to cause the repeated gripping and folding.

20. The method of claim 19, wherein the at least one rotatably mounted packing element comprises:
a plurality of circumferentially spaced apart hubs; and
a plurality of members extending radially from each hub;
wherein the method comprises rotating the at least one rotatably mounted packing element such that tips of the members repeatedly engage the flexible tubing and pull it in an axial direction as the hubs rotate, thereby to cause the concertinaing.

21. The method of any one of claims 17 to 20, comprising synchronising the gripping and folding of each packing element with that of the other packing elements.

22. The method of any one of claims 17 to 21, wherein the at least one packing element comprises at least one compression element, the method comprising using the at least one compression element to compress the axially concertinaed flexible tubing into the packing region.
